# FASCICULE DE BREVET EUROPEEN

(11) **EP 1 514 325 B1**
(45) Date de publication et mention de la délivrance du brevet: **04.08.2010**
(21) Numéro de dépôt: 03760043.4
(22) Date de dépôt: 16.06.2003
(51) Int. Cl.: H01M 10/0525, H01M 10/0565, H01M 10/0585, H01M 2/16

(54) **ACCUMULATEUR AU LITHIUM**
LITHIUMBATTERIE
ACCUMULATEUR AU LITHIUM

(30) Priorité: 17.06.2002 FR 0207433
(43) Date de publication de la demande: 16.03.2005
(73) Titulaire: Electricité de France, 75008 Paris (FR)
(72) Inventeur: SANNIER, Lucas, F-80000 Amiens (FR); GRUGEON, Sylvie, F-60960 Feuquières (FR); LASCAUD, Stéphane, F-77300 Fontainebleau (FR); TARASCON, Jean-Marie, Rés. des Jardins de la Somme, F-80000 Amiens (FR)
(74) Mandataire: Pöpping, Barbara
(86) Numéro de dépôt international: PCT/FR2003/001818
(87) Numéro de publication internationale: WO 2003/107469

(56) Documents cités:
- EP-A- 0 893 836
- EP-A- 1 256 991
- WO-A-00/51806
- WO-A-02/061872
- US-A- 5 837 015
- US-A- 6 165 641
- US-A- 6 165 645
- DATABASE CA [Online] CHEMICAL ABSTRACTS SERVICE, COLUMBUS, OHIO, US; GUO, CHUNTAI: "Laminate polymer electrolyte membranes and manufacture of the membranes and lithium batteries using the membranes" XP002241937 extrait de STN Database accession no. 134:134099 & CN 1 259 773 A (TCL JINNENG BATTERY CO., LTD., HUIZHOU, PEOP. REP. CHINA) 12 juillet 2000 (2000-07-12)

## Description

L'invention concerne un accumulateur électrochimique au lithium comprenant au moins une électrode positive (ou cathode), au moins un électrolyte liquide comprenant au moins un sel de lithium, et au moins une électrode négative (ou anode). L'invention concerne aussi le procédé de fabrication et l'utilisation d'un tel accumulateur.

L'extraordinaire essor du marché des appareils électroniques portables suscite en amont une émulation de plus en plus importante dans le domaine des batteries rechargeables ou accumulateurs. Outre le téléphone mobile qui connaît un développement fulgurant, les ventes des ordinateurs portables, avec une progression de 20% par an, impliquent de nouvelles exigences quant aux performances de leurs alimentations. A cela s'ajoute aussi l'expansion du marché des caméscopes, des appareils photos numériques, des baladeurs CD, des outils sans fils et de nombreux jouets qui requièrent de plus en plus souvent des batteries rechargeables. Enfin, il est probable que le XXIème siècle verra un développement considérable du véhicule électrique, dont l'émergence résulte de la réglementation internationale de plus en plus sévère quant aux émissions toxiques des moteurs thermiques.

Bien que le marché des accumulateurs soit de nos jours très attractif, il est cependant important de faire le bon choix afin de pouvoir se positionner pour la nouvelle génération d'appareils électroniques. En réalité, ce sont les progrès au niveau de l'électronique qui dictent le cahier des charges pour les accumulateurs de demain. Aux demandes d'accumulateurs plus autonomes s'est ajouté ces dernières années, en raison de la miniaturisation, le désir d'avoir des accumulateurs plus minces et flexibles. La technologie polymère sec ainsi que la technologie polymère Li-ion peuvent apporter cette flexibilité. Cependant, la première technologie ne peut opérer qu'à des températures supérieures à 60°C et n'est donc pas vouée à des applications portables. Quant à la seconde technologie, elle pénètre actuellement le marché du portable aux dépens, tout de même, d'une perte en énergie associée à l'utilisation du carbone plutôt que du lithium.

Les accumulateurs à ions lithium utilisent des membranes gélifiées de haute tenue mécanique à base de polymères fluorés, par exemple du PVDF (Fluorure de Polyvinylidène), qui ne sont cependant pas compatibles avec le Li métal (réaction de dimérisation à l'interface). Cependant, outre des problèmes de dendrite, d'autres verrous technologiques concernant la compatibilité des polymères avec du Li métal restent à lever. En effet la technologie polymère sec utilise du POE (Poly Oxyde d'Ethylène), et la gélification de ce polymère, bien que possible, conduit à une membrane qui adhère bien au Li mais de faible tenue mécanique et par conséquent peu manufacturable. Pour pallier à ces difficultés, il a été envisagé de mélanger les deux polymères POE et PVDF-HFP ((fluorure de polyvinylidène)-co-(hexafluoro propylène)) ensemble de façon à cumuler les propriétés d'adhésion et de tenue mécanique. Ainsi, le brevet US-A-6.165.645 décrit un électrolyte gélifié pour accumulateur lithium polymère, qui comprend un alliage de polymères et une solution électrolytique organique. Un tel alliage comprend un polymère difficilement soluble dans la solution électrolytique, par exemple du PVDF, et un autre polymère soluble dans ladite solution, par exemple du POE. Cependant l'accumulateur utilisant la technologie telle que décrite dans le brevet US-A-6.165.645 souffre de problèmes de cyclabilité associés à la formation de dendrites de lithium.

Les inventeurs ont trouvé que, grâce à l'accumulateur selon l'invention, il est possible d'optimiser l'utilisation d'une couche de séparateur plastifié, appelé SP, comprenant au moins un polymère plastifiable, appelé PP, faiblement solvaté par l'électrolyte liquide, et d'une couche de séparateur gélifié, appelé SG, comprenant au moins un polymère gélifiable, appelé PG, gélifié en majeure partie par l'électrolyte liquide.x

Par « polymère plastifiable », on entend selon l'invention un polymère pouvant être plastifié par mise en contact avec l'électrolyte liquide, c'est-à-dire ayant une faible affinité pour l'électrolyte liquide. Par « couche de séparateur plastifié », on entend selon l'invention une couche d'un séparateur comprenant en majeure partie au moins un polymère plastifié. Une telle couche est généralement telle que la tenue mécanique de la couche de polymère plastifiable est conservée après mise en contact avec l'électrolyte liquide, c'est-à-dire après formation de la couche de polymère plastifié.

Par « polymère gélifiable », on entend selon l'invention un polymère pouvant être gélifié par mise en contact avec l'électrolyte liquide, c'est-à-dire ayant une forte affinité pour l'électrolyte liquide. Par « couche de séparateur gélifié», on entend selon l'invention une couche d'un séparateur comprenant en majeure partie au moins un polymère gélifié. Une telle couche est généralement telle que la tenue mécanique de la couche de polymère gélifiable est perdue après mise en contact avec l'électrolyte liquide, c'est-à-dire après formation du gel qu'est le polymère gélifié.

L'accumulateur selon l'invention est un accumulateur électrochimique au lithium comprenant au moins une électrode positive (ou cathode), au moins un électrolyte liquide comprenant au moins un sel de lithium, et au moins une électrode négative (ou anode), ledit accumulateur étant **caractérisé en ce qu**'il comprend au moins une couche d'un séparateur gélifié, SG, comprenant au moins un polymère PG, gélifiable par de l'électrolyte liquide, qui est au moins en partie, de préférence pratiquement totalement, gélifié par l'électrolyte liquide, en contact avec l'électrode négative, et en ce qu'il comprend au moins une couche d'un séparateur plastifié, SP, comprenant au moins un polymère PP, plastifiable par l'électrolyte liquide, qui est au moins en partie, de préférence pratiquement totalement, plastifié par l'électrolyte liquide, en contact au moins en partie, de préférence pratiquement totalement, avec la couche de séparateur SG.

L'accumulateur selon l'invention comprend ainsi au moins une alternance d'électrode positive, de séparateur et d'électrode négative, ou cellule. Selon l'invention, l'accumulateur peut comprendre plusieurs de ces alternances ou cellules.

Avantageusement, le contact entre l'électrode négative et la couche de séparateur SG, grâce aux propriétés physiques de la « glue » que forme le polymère PG gélifié par l'électrolyte liquide, assure une adhésion aussi bien qu'une interface de qualité. De plus, la présence de polymère PP permet d'assurer la tenue mécanique du séparateur SP. Par « séparateur » on entend selon l'invention un moyen physique pour séparer les deux électrodes, c'est-à-dire un moyen physique pour éviter le contact entre l'électrode négative et l'électrode positive, tout en permettant le passage des espèces ioniques nécessaires au fonctionnement de l'accumulateur.

Selon un mode de réalisation de l'invention, la couche de séparateur SP est en contact au moins en partie, de préférence pratiquement totalement, avec l'électrode positive. Dans un tel cas on parle de séparateur bicouche. Ainsi, dans ce cas, de préférence, ledit accumulateur comprend, de l'électrode positive à l'électrode négative, une double couche constituée d'une couche de séparateur SP et d'une couche de séparateur SG.

Selon un autre mode de réalisation de l'invention, l'accumulateur comprend, de plus, une autre couche de séparateur SG, appelée SGa, au moins en partie, de préférence pratiquement totalement, entre l'électrode positive et la couche de séparateur SP. Pour simplifier, quand on parle dans la suite du texte de propriétés ou nature de la couche de séparateur SG, cela concerne aussi bien sûr la couche de séparateur SGa. Dans un tel cas on parle de séparateur tri couche. Ainsi, dans ce cas, de préférence, ledit accumulateur comprend, de l'électrode positive à l'électrode négative, une triple couche constituée d'une couche de séparateur SGa, d'une couche de séparateur SP et d'une couche de séparateur SG.

Le polymère PP est généralement choisi dans le groupe formé par le fluorure de polyvinylidène PVDF, le polystyrène PS, le poly chlorure de vinyle PVC, le polycarbonate PC, l'éthylène propylène diène monomère EPDM, et leurs dérivés. Par « dérivés » on entend tout co-polymère ou polymère réticulé obtenu à partir d'un de ces polymères. De préférence le polymère PP est choisi dans le groupe formé par le fluorure de polyvinylidène PVDF et les (fluorure de polyvinylidène)-co-(hexafluoro propylène) PVDF-HFP comprenant généralement de 0 (exclu) à 30%,de préférence de 4 à 12%, en moles, de HFP. De façon encore plus préférée, le polymère PP est un PVDF-HFP comprenant généralement de 0 (exclu) à 30%,de préférence de 4 à 12%, en moles, de HFP.

Le polymère PG est généralement choisi dans le groupe formé par le polyméthacrylate de méthyle PMMA, le polyoxyde d'éthylène POE et le poly acrylo nitrile PAN, et leurs dérivés tels que par exemple les copolymères de polyoxyde d'éthylène réticulés comprenant généralement au moins un motif choisi dans le groupe formé par les motifs d'épichloridrine, les motifs d'oxyde de propylène et les motifs d'allyl glycidyl éther. De préférence le polymère PG est lé POE.

L'électrode positive comprend de préférence du carbone, de la matière active, du polymère PP et éventuellement au moins un plastifiant. Par « plastifiant » on entend un liquide organique ou un oligomère ayant une faible affinité pour le polymère PP. Un tel plastifiant permet la création au sein du polymère PP de pores qu'il occupe. De préférence, de tels pores peuvent, être libérés par un passage dans un bain d'un non solvant du polymère PP, ou par toute autre méthode connue de l'homme du métier pour permettre l'extraction du plastifiant sans modifier la structure du polymère PP. Avantageusement, lors du fonctionnement de l'accumulateur au lithium, de tels pores sont occupés par de l'électrolyte liquide, qui participe aux réactions électrochimiques au sein de l'électrode positive.

De façon plus générale, l'électrode positive peut comprendre au moins un oxyde de métal de transition (élément des groupes de la Classification Périodique des Eléments) capable d'intercaler et de désintercaler du lithium de manière réversible, par exemple choisi dans le groupe formé par LiCoO₂, LiNiO₂, LiMn₂O₄, LiV₃O₈, V₂O₅, V₆O₁₃, LiFePO₄ et LiₓMnO₂ (0<x<0,5) . L'électrode positive comprend généralement en outre un collecteur de courant, par exemple de l'aluminium.

L'électrode négative est de préférence à base de lithium métal, c'est-à-dire qu'elle comprend principalement du lithium métal. Mais de façon plus générale, l'électrode négative peut comprendre du lithium métallique, un alliage de lithium, et du carbone ou un composé inorganique capable d'intercaler et de désintercaler du lithium de manière réversible. L'électrode négative peut aussi comprendre un collecteur de courant, par exemple du cuivre.

L'électrolyte liquide comprend généralement au moins un sel de lithium tel que par exemple les sels choisis dans le groupe formé par LiCF₃SO₃, LiClO₄, LiN(C₂F₅SO₂)₂, LiN(C_{F}3SO₂)₂, LiAsF₆, LiSbF₆, LiPF₆, et LiBF₄.

Le plastifiant éventuellement présent est généralement choisi dans le groupe formé par les oligomères de POE, le Di Butyl Phtalate (DBP) et le carbonate de propylène (CP).

L'invention concerne également un procédé de fabrication d'un accumulateur électrochimique au lithium comprenant au moins une électrode positive (ou cathode), au moins un électrolyte liquide comprenant au moins un sel de lithium, et au moins une électrode négative (ou anode) comprenant un assemblage d'au moins une couche de séparateur gélifié, SG, comprenant au moins un polymère PG, gélifiable par l'électrolyte liquide, sur l'électrode négative, d'au moins une couche de séparateur plastifié, SP, comprenant au moins un polymère PP, plastifiable par l'électrolyte liquide, sur ladite couche de séparateur SG, éventuellement d'au moins une autre couche de séparateur gélifié SG, appelée SGa, comprenant au moins un polymère PG, sur ladite couche de séparateur SP, l'ensemble de ces deux ou trois couches constituant un séparateur entre l'électrode négative et l'électrode positive, un assemblage dudit séparateur sur l'électrode positive, une imprégnation dudit séparateur par de l'électrolyte liquide.

Dans un mode de réalisation du procédé selon l'invention, l'électrode positive est généralement fabriquée en solution à partir de polymère PP, de carbone, de matière active, de plastifiant et de solvant.

Dans un autre mode de réalisation du procédé selon l'invention, l'électrode positive est généralement fabriquée par extrusion à partir de polymère PP, de carbone, de matière active et de plastifiant.

Dans un mode de réalisation du procédé selon l'invention, la couche de séparateur SP est généralement fabriquée en solution à partir de polymère PP, de plastifiant et de solvant.

Dans un autre mode de réalisation du procédé selon l'invention, la couche de séparateur SP est généralement fabriquée par extrusion à partir de polymère PP, de plastifiant ou d'électrolyte liquide.

Dans un mode de réalisation du procédé selon l'invention, la couche de séparateur SG est généralement fabriquée en solution à partir de polymère PG, de solvant et éventuellement de plastifiant.

Dans un autre mode de réalisation du procédé selon l'invention, la couche de séparateur SG est généralement fabriquée par extrusion à partir de polymère PG et éventuellement de plastifiant ou d'électrolyte liquide.

De préférence, le polymère PP est généralement chargé en au moins un composé minéral, par exemple choisi dans le groupe formé par MgO, SiO₂, Al₂O₃, TiO₂, BaTiO₃, et les sels de lithium tel que LiAlO₂ ou LiI.

De manière préférée, le polymère PG est généralement chargé en au moins un composé minéral, par exemple choisi dans le groupe formé par MgO, SiO₂, Al₂O₃, TiO₂, BaTiO₃, et les sels de lithium tel que LiAlO₂ ou LiI.

Dans un mode de réalisation, l'assemblage des deux ou trois couches SP ou SG en un séparateur se fait par laminage ou calandrage à chaud. Par laminage on entend le passage des couches entre deux rouleaux dont l'écartement est maintenu constant. Par calandrage on entend le passage des couches entre deux rouleaux, la pression appliquée par les deux rouleaux étant constante. Par laminage ou calandrage à chaud, on entend à une température généralement comprise entre 50 et 140°C, par exemple égale à environ 130°C. La pression exercée par les rouleaux est généralement comprise entre environ 5 et environ 30 psi, c'est-à-dire entre environ 0,035 et environ 0,21 MPa, et par exemple égale à environ 20 psi (soit environ 0,14 MPa).

Dans un autre mode de préparation, lesdites couches forment un séparateur tri couche que l'on obtient en passant la couche de séparateur SP en solution de polymère PG, ou dans une solution d'électrolyte liquide dans lequel le polymère PG est mis en solution.

Dans un autre mode de préparation, lesdites couches forment un séparateur bicouche que l'on obtient en passant une couche de séparateur SP préalablement assemblée avec l'électrode positive, en solution de polymère PG, ou dans une solution d'électrolyte liquide dans lequel le polymère PG est mis en solution.

L'électrode positive et le séparateur sont généralement assemblés par laminage ou calandrage à chaud pour former un complexe plastique.

De plus, le ou les plastifiant(s) éventuellement présent(s) dans l'assemblage de l'électrode positive et du séparateur est (sont) généralement évacué(s) par lavage ou extraction sous vide de façon à obtenir un assemblage pratiquement exempt de plastifiant.

L'assemblage du séparateur et de l'électrode positive, de préférence pratiquement exempt de plastifiant, est généralement mis en contact avec l'électrode négative par une étape de laminage ou de calandrage éventuellement à chaud.

Le polymère PP, le polymère PG, l'électrode positive, l'électrode négative, l'électrolyte liquide et le plastifiant sont généralement, dans le cadre du procédé selon l'invention, choisis de la même façon que précédemment explicité dans le cas de l'accumulateur selon l'invention.

L'invention concerne enfin l'utilisation d'un accumulateur tel que décrit précédemment ou fabriqué selon le procédé tel que décrit précédemment pour véhicule hybride, véhicule électrique, application stationnaire (i.e. le secours électrique assuré par une batterie dans le cas d'une panne du réseau électrique) ou équipement portable.

L'invention sera mieux comprise et d'autres caractéristiques et avantages apparaîtront à la lecture de la description qui va suivre, donnée à titre non limitatif, par référence aux figures 1 à 7.
La figure 1 représente une coupe schématique d'un accumulateur à séparateur bicouche selon l'invention.
La figure 2 représente une coupe schématique d'un accumulateur comparatif selon l'art antérieur.
La figure 3 représente le pourcentage de la capacité restituée (C en %) par rapport au nombre de cycles (N), avec l'accumulateur selon l'invention de la figure 1 et avec l'accumulateur selon l'art antérieur de la figure 2, en régime lent.
La figure 4 représente le pourcentage de la capacité restituée (C en %) par rapport au nombre de cycles (N), avec l'accumulateur selon l'invention de la figure 1, en régime rapide.
La figure 5 représente une coupe schématique d'un accumulateur selon l'invention.
La figure 6 représente le pourcentage de la capacité restituée (C en %) par rapport au nombre de cycles (N), avec un accumulateur selon l'invention de la figure 5.
La figure 7 représente une coupe schématique d'un accumulateur à séparateur tri couche selon l'invention.

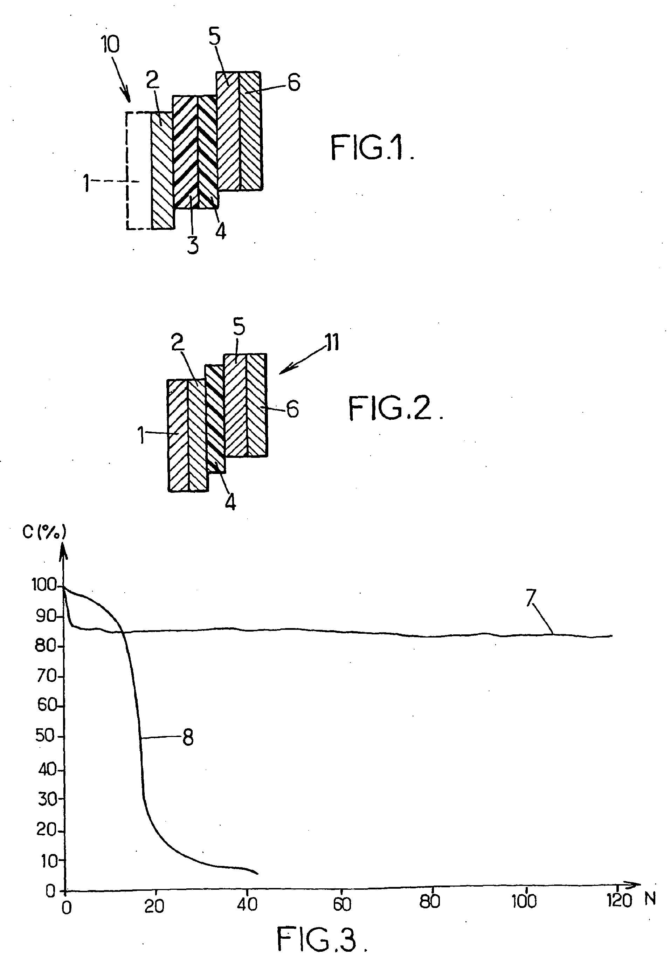

La figure 1 représente une coupe schématique d'un accumulateur 10 à séparateur bicouche (3,4) selon l'invention. L'accumulateur 10 comprend un collecteur 1 d'électrode négative par exemple en cuivre, une électrode négative 2 (partie active) qui est par exemple une couche de Li métal, une couche 3 qui est constituée par exemple d'une couche de POE, une couche 4 qui est constituée par exemple d'une couche de PVDF-HFP comprenant 12% molaire de HFP, une couche 5 (partie active de l'électrode positive), et un collecteur 6 de courant d'électrode positive par exemple en aluminium. La présence du collecteur 1 n'est pas obligatoire; c'est pourquoi ce collecteur 1 a été représenté par des pointillés.

La figure 2 représente une coupe schématique d'un accumulateur 11 comparatif selon l'art antérieur, qui reprend tous les éléments de la figure 1 dans le cas de la présence d'un collecteur 1, à l'exception de la couche 3.

La figure 3 est commentée ci-après dans l'exemple 1.

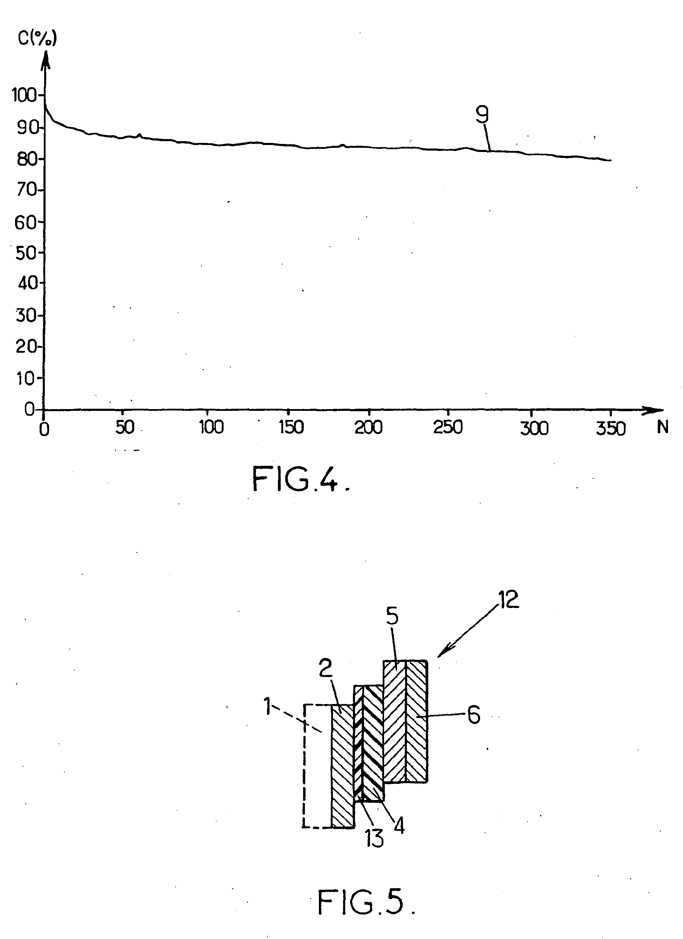

La figure 4 est commentée ci-après dans l'exemple 2.

La figure 5 représente une coupe schématique d'un accumulateur 12 à séparateur bicouche (13,4) selon l'invention, qui reprend tous les éléments de la figure 1 à l'exception de la couche 3. A la place de la couche 3 se trouve une couche 13 qui est constituée par exemple d'une couche de gel de POE, étalée par exemple au pinceau sur la couche 4 lors de la fabrication de l'accumulateur 12.

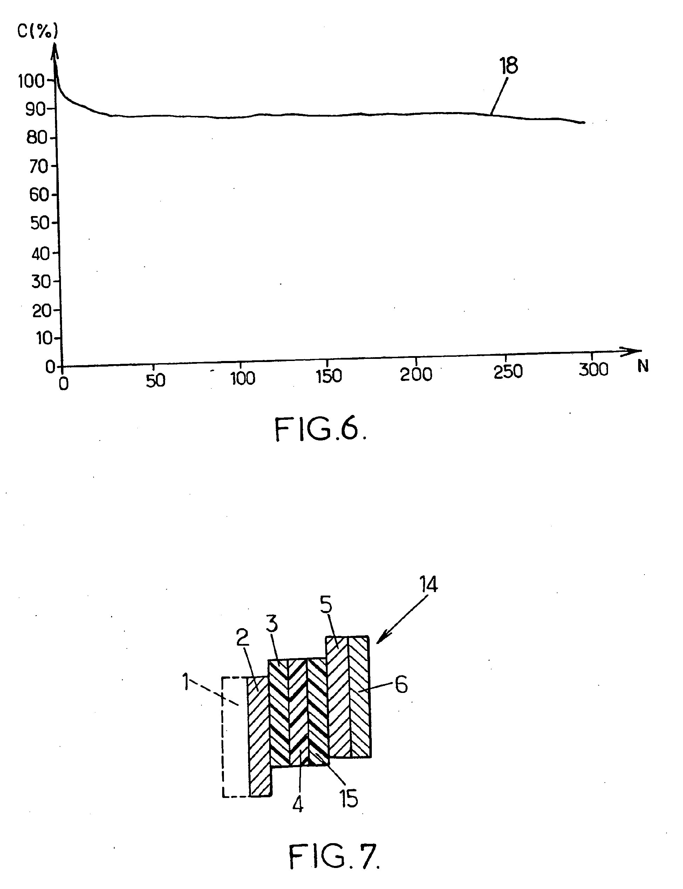

La figure 6 est commentée ci-après dans l'exemple 4.

La figure 7 représente une coupe schématique d'un accumulateur 14 à séparateur tri couche (3,4,15) selon l'invention. L'accumulateur 14 reprend tous les éléments de la figure 1, auxquels s'ajoute une couche 15, par exemple de POE, entre la couche 4 et la couche 5.

### EXEMPLES

Les exemples qui suivent illustrent l'invention sans pour autant en limiter la portée.

### Procédé de fabrication de l'accumulateur selon l'invention des exemples 1 et 2

Le procédé de fabrication ci-dessous décrit la fabrication d'un accumulateur 10 mono cellulaire, c'est-à-dire constitué d'une seule succession d'électrode négative (5,6), d'électrode positive (1,2), et d'un séparateur bicouche (3,4) constitué d'une couche 3 de polymère PG qui est par exemple du POE gélifié par de l'électrolyte liquide et d'une couche 4 de polymère plastifié qui est par exemple du PVDF-HFP, la couche 3 étant mis en place entre l'électrode négative (1,2) et la couche 4, et la couche 4 étant mis en place entre l'électrode positive (5,6) et la couche 3. Dans le cas décrit dans les exemples 1 à 4, l'électrode négative (1,2) comprend du lithium métal 2, avec la présence éventuelle d'un collecteur en cuivre 1. L'électrode positive (5,6), elle, comprend un collecteur de courant 6 en aluminium qui comporte une couche 5 de matière active.

La couche 3 POE est fabriquée à partir d'un mélange POE + acétonitrile qu'on laisse évaporer pendant quelques heures sur une plaque de verre ou sur une feuille de Mylar^{®}. Il a typiquement une épaisseur de 15 µm. La couche 4 PVDF-HFP est obtenue selon une technologie qui consiste à étendre sur un support Mylar^{®}, grâce à un appareil de type "Doctor Blade", une solution de PVDF-HFP, DBP (Di Butyl Phtalate), SiO₂ et acétone. Une couche plastique pour l'électrode positive s'obtient en étendant une solution PVDF-HFP, DBP, matériau actif (LiV₃O₈) et du carbone dans un rapport 10 :1 en poids. L'assemblage de la cellule comporte tout d'abord l'adhésion à chaud de l'électrode 5 plastique positive au collecteur 6 de courant en aluminium par calandrage à chaud à une température voisine de 135°C et à une pression d'environ 20 psi (soit environ 0,14 MPa). L'ensemble résultant est ensuite soudé par laminage à chaud à une température voisine de 130°C et à une pression d'environ 20 psi (soit environ 0,14 MPa) aux couches 3 et 4 du séparateur bicouche (3,4) (PVDF-HFP, POE). Le DBP est ensuite extrait par passage dans un bain d'éther de l'ensemble pour obtenir une membrane poreuse. Cette membrane poreuse est ensuite séchée et rentrée en boite à gants de type Jacomex, par exemple Jacomex BS531NMT4, garantissant un taux d'humidité inférieur à 1 ppm et remplie de gaz inerte (argon) pour être de nouveau imbibée par un électrolyte liquide. Celui-ci remplit les pores laissés vacants par le plastifiant et gélifie le POE. La membrane (3,4,5,6) ainsi obtenue est finalement déposée sur l'électrode négative 2 Li métal préalablement laminée à chaud avec une grille 1 de cuivre comme collecteur de courant. Il est important de noter que l'interface Li/électrolyte se fait de façon in situ via la formation d'un gel lors de la mise en contact de la couche POE avec l'électrolyte liquide. L'ensemble est alors scellé de façon hermétique dans un sac plastique à base d'aluminium (du type « blue bag » de Shield Pack) pour être testé électrochimiquement.

Selon l'invention, on peut noter pour la fabrication du séparateur (3,4) (PVDF-HFP/POE), il est aussi possible de procéder autrement, à savoir de procéder :
- Au passage de la membrane PVDF-HFP dans une solution acétonitrile POE de façon à laisser une fine pellicule en surface ou au recouvrement par exemple par pinceau de ladite fine pellicule (voir exemple 3),
- Au passage de la membrane PVDF-HFP dans un électrolyte liquide dans lequel est déjà mis en solution une certaine quantité de POE (voir exemple 4).

### Exemple 1 : cyclage d'un accumulateur en régime lent

Selon les conditions de montage décrites ci-dessus, un accumulateur utilisant une électrode positive (5,6) à base de LiV₃O₈, un séparateur PVDF-HFP/POE (3,4) constitué des deux couches 3 et 4, ainsi qu'une électrode négative (1,2) en lithium métallique, est cyclée galvano statiquement entre 3,5 et 2 volts à un régime équivalent à l'insertion d'un ion lithium en 5 heures. L'électrolyte liquide utilisé est un mélange de carbonate d'éthylène et de carbonate de Propylène dans un rapport 1 :1 en masse et du sel de lithium connu sous le nom LiTFSI (pour Lithium TriFluorométhaneSulfonImide) (en fait du sel LiN(CF₃SO₂)₂ vendu sous le nom commercial Fluorad™ HQ-115 par la société 3M) dans une concentration de 1 mole par litre de solvant. La figure 3 représente le pourcentage de la capacité restituée (C en %) par rapport au nombre de cycles (N), grâce aux courbes 7 et 8. La courbe 7 représente la courbe obtenue avec un accumulateur 10 selon l'invention tel que représenté schématiquement sur la figure 1. La courbe 8 représente la courbe obtenue avec un accumulateur 11 comparatif tel que représenté schématiquement sur la figure 2. La comparaison entre les deux courbes 7 et 8 montre que l'intercalation d'une couche POE gélifié entre l'anode en lithium métallique et le séparateur à base de PVDF-HFP, permet à un accumulateur de faire plus de 120 cycles tout en gardant une capacité supérieure à 80% de sa capacité initiale (critère de fin de vie pour les accumulateurs industriels).

### Exemple 2: cyclage d'un accumulateur selon l'exemple 1 en régime rapide

Afin de se rapprocher des exigences des industriels en terme de régime de cyclage, l'accumulateur 10 représenté sur la figure 1 a subi le programme de test électrochimique suivant :
- Un premier cycle comprenant une décharge à -0,2mAh/cm² et une charge à 0,1mAh/cm²
- Les autres cycles comprennent une décharge de l'accumulateur en 2 heures (C/2), ainsi qu'une charge en 10 heures (C/10).

Dans les deux cas, les tensions limites sont 3,3V et 2V.

La figure 4 représente le pourcentage de la capacité restituée (C en %) par rapport au nombre de cycles (N). La courbe 9 représente la courbe obtenue avec un accumulateur selon l'invention tel que représenté schématiquement sur la figure 1. Lors de ces tests, la technique de mise en oeuvre de l'accumulateur 10 est la même que dans l'exemple précédent.

Malgré un régime de décharge élevé, on constate que l'accumulateur selon l'invention utilisant une couche de POE (totalement gélifié après mise en contact avec l'électrolyte liquide) entre le lithium et le séparateur à base de PVDF-HFP, est capable de restituer plus de 80% de sa capacité initiale durant 350 cycles.

### Exemple 3 : accumulateur construit à partir d'une membrane PVDF revêtue d'une solution de POE

Dans les deux exemples précédents, le POE est préparé sous forme de couche avant d'être mis en contact avec l'électrolyte liquide. Dans le présent exemple, afin d'éliminer avantageusement une étape dans le processus de fabrication, du POE.est utilisé directement sous forme de gel. Pour cela, du POE est mis en présence d'un solvant (typiquement de l'acétonitrile) afin d'obtenir un gel. Un tel accumulateur est représenté schématiquement à la figure 5. A l'aide d'un pinceau, une fine couche de cette solution est étalée à la surface du lithium. Parallèlement, l'ensemble cathode / séparateur PVDF-HFP est imprégné d'électrolyte liquide. Le tout est assemblé pour former une batterie. Ainsi, le PEO est utilisé directement sous forme de gel.

### Exemple 4 : accumulateur construit à partir d'une membrane PVDF imprégnée par un électrolyte liquide dans lequel se trouve mis en solution du POE.

Le même principe, exposé dans l'exemple 3, peut être transposé en utilisant l'électrolyte liquide (EC : PC : LiTFSI 1mol/L) comme solvant du PEO. Dans ce cas, le complexe cathode/séparateur PVDF-HFP est imbibé par le gel. Les conditions de cyclage de la batterie représentée sont les mêmes que dans l'exemple 2. L'accumulateur testé est représenté schématiquement à la figure 5.

La tenue en capacité est identique à celle obtenue dans les batteries utilisant une couche de PEO.

La figure 6 représente le pourcentage de la capacité restituée (C en %) par rapport au nombre N de cycles, d'un accumulateur 12 tel que représenté sur la figure 5. La courbe 18 représente la courbe obtenue avec un tel accumulateur 12 selon l'invention.

On constate que la tenue en capacité est identique à celle obtenue dans les accumulateurs selon l'invention utilisant une couche de POE.

## Revendications

1. Accumulateur électrochimique (10 ; 12 ; 14) au lithium comprenant
- au moins une électrode positive (5,6),
- au moins un électrolyte liquide comprenant au moins un sel de lithium, et
- au moins une électrode négative (1,2),
ledit accumulateur (10 ;12 ;14) étant **caractérisé en ce qu'**il comprend au moins une couche (3 ;13) d'un séparateur gélifié, SG, comprenant au moins un polymère PG choisi dans le groupe formé par le poly(méthacrylate de méthyle) (PMMA), le poly(oxyde d'éthylène) (POE), le poly(acrylonitrile) (PAN) et leurs dérivés, gélifiable par l'électrolyte liquide, qui est au moins en partie gélifié par l'électrolyte liquide, en contact avec l'électrode négative (1,2), et **en ce qu'**il comprend au moins une couche (4) d'un séparateur plastifié, SP, comprenant au moins un polymère PP choisi dans le groupe formé par le poly(fluorure de vinylidène) (PVDF), le polystyrène (PS), le poly(chlorure de vinyle) (PVC), le polycarbonate (PC), les copolymères éthylène-propylène-diène monomère (EPDM), et leurs dérivés, plastifiable par l'électrolyte liquide, en contact au moins en partie avec la couche (3 ; 13) de séparateur SG.

2. Accumulateur selon la revendication 1 tel que la couche (4) de séparateur SP est en contact au moins en partie avec l'électrode positive (5,6).

3. Accumulateur selon la revendication 1 comprenant de plus une autre couche (15) de séparateur SG, appelée SGa au moins en partie entre l'électrode positive (5,6) et la couche (4) de séparateur SP.

4. Accumulateur selon l'une des revendications 1 à 3 dans lequel le polymère PP est choisi dans le groupe formé par les poly(fluorure de vinylidène) (PVDF) et les poly(fluorure de vinylidène)-co-(hexafluoropropylène) (PVDF-HFP) et de façon préférée le polymère PP est un PVDF-HFP.

5. Accumulateur selon l'une des revendications 1 à 4 dans lequel le polymère PG est le POE.

6. Accumulateur selon l'une des revendications 1 à 5 dans lequel l'électrode positive (5,6) comprend du carbone, de la matière active, du polymère PP et éventuellement au moins un plastifiant.

7. Procédé de fabrication d'un accumulateur électrochimique (10 ; 12 ; 14) au lithium comprenant au moins une électrode positive (5,6), au moins un électrolyte liquide comprenant au moins un sel de lithium, et au moins une électrode négative (1,2) comprenant un assemblage d'au moins une couche (3 ; 13) de séparateur gélifié, SG, comprenant au moins un polymère PG choisi dans le groupe formé par le poly(méthacrylate de méthyle) (PMMA), le poly(oxyde d'éthylène) (POE), le poly(acrylonitrile) (PAN) et leurs dérivés, gélifiable par l'électrolyte liquide, sur l'électrode négative (1,2), d'au moins une couche (4) de séparateur plastifié, SP, comprenant au moins un polymère PP choisi dans le groupe formé par le poly(fluorure de vinylidène) (PVDF), le polystyrène (PS), le poly(chlorure de vinyle) (PVC), le polycarbonate (PC), les copolymères éthylène-propylène-diène monomère (EPDM), et leurs dérivés, plastifiable par l'électrolyte liquide, sur ladite couche de séparateur SG, éventuellement d'au moins une autre couche (15) de séparateur gélifié SG, appelée SGa, comprenant au moins un polymère PG, sur ladite couche (4) de séparateur SP, l'ensemble de ces deux ou trois couches constituant un séparateur entre l'électrode négative (1,2) et l'électrode positive (5,6), un assemblage dudit séparateur sur l'électrode positive (5,6), une imprégnation dudit séparateur par l'électrolyte liquide.

8. Procédé selon la revendication 7 dans lequel l'électrode positive (5,6) est fabriquée en solution à partir de polymère PP, de carbone, de matière active, de plastifiant et de solvant.

9. Procédé selon la revendication 7 dans lequel l'électrode positive (5,6) est fabriquée par extrusion à partir de polymère PP, de carbone, de matière active et de plastifiant.

10. Procédé selon l'une des revendications 7 à 9 dans lequel la couche (4) de séparateur SP est fabriquée en solution à partir de polymère PP, de plastifiant et de solvant.

11. Procédé selon l'une des revendications 7 à 9 dans lequel la couche (4) de séparateur SP est fabriquée par extrusion à partir de polymère PP, de plastifiant ou d'électrolyte liquide.

12. Procédé selon l'une des revendications 7 à 11 dans lequel la couche (3 ; 13 ; 15) de séparateur SG est fabriquée en solution à partir de polymère PG, de solvant et éventuellement de plastifiant.

13. Procédé selon l'une des revendications 7 à 11 dans lequel la couche (3 ; 13 ; 15) de séparateur SG est fabriquée par extrusion à partir de polymère PG et éventuellement de plastifiant ou d'électrolyte liquide.

14. Procédé selon l'une des revendications 7 à 13 dans lequel le polymère PP est chargé en au moins un composé minéral choisi dans le groupe formé par MgO, SiO₂, Al₂O₃, TiO₂, BaTiO₃, LiI et LiAlO₂.

15. Procédé selon l'une des revendications 7 à 14 dans lequel le polymère PG est chargée en au moins un composé minéral choisi dans le groupe formé par MgO, SiO₂, Al₂O₃, TiO₂, BaTiO₃, LiI et LiAlO₂.

16. Procédé selon l'une des revendications 7 à 15 dans lequel l'assemblage des deux ou trois couches SP et SG en un séparateur se fait par laminage ou calandrage à chaud.

17. Procédé selon l'une des revendications 7 à 15 dans lequel lesdites couches forment un séparateur tri couche (3 ; 4 ; 15) que l'on obtient en passant la couche (4) de séparateur SP en solution de polymère PG, ou dans une solution d'électrolyte liquide dans lequel le polymère PG est mis en solution.

18. Procédé selon l'une des revendications 7 à 16 dans lequel lesdites couches forment un séparateur bicouche que l'on obtient en passant une couche (4) de séparateur SP préalablement assemblée avec l'électrode positive, en solution de polymère PG, ou dans une solution d'électrolyte liquide dans lequel le polymère PG est mis en solution.

19. Procédé selon l'une des revendications 7 à 18 dans lequel l'électrode positive (5,6) et le séparateur sont assemblés par laminage ou calandrage à chaud pour former un complexe plastique.

20. Procédé selon l'une des revendications 7 à 19 dans lequel le ou les plastifiant(s) éventuellement présent(s) dans l'assemblage de l'électrode positive (5,6) et du séparateur est (sont) évacué(s) par lavage ou extraction sous vide de façon à obtenir un assemblage pratiquement exempt de plastifiant.

21. Procédé selon l'une des revendications 7 à 20 dans lequel l'assemblage du séparateur et de l'électrode positive (5,6), de préférence pratiquement exempt de plastifiant, est mis en contact avec l'électrode négative (1,2) par une étape de laminage ou de calandrage.

22. Procédé selon l'une des revendications 7 à 21 dans lequel le plastifiant éventuellement présent est choisi dans le groupe formé par les oligomères de POE, le Di Butyl Phtalate (DBP) et le carbonate de propylène (CP).

23. Procédé selon l'une des revendications 7 à 22 dans lequel le polymère PP est le PVDF-HFP.

24. Procédé selon l'une des revendications 7 à 23 dans lequel le polymère PG est choisi dans le groupe formé par le poly(oxyde d'éthylène) (POE) et le poly(acrylonitrile) (PAN), et leurs dérivés, de préférence le polymère PG est le POE.

25. Utilisation d'un accumulateur (10 ; 12 ; 14) selon l'une des revendications 1 à 6 ou fabriqué selon le procédé de l'une des revendications 7 à 24 pour véhicule hybride, véhicule électrique, application stationnaire ou équipement portable.

## Claims

1. A lithium electrochemical cell battery (10 ; 12 ; 14) comprising
- at least one positive electrode (5,6),
- at least one liquid electrolyte comprising at least one lithium salt, and
- at least one negative electrode (1,2),
said battery being **characterized by** the fact that it comprises at least one layer (3;13) of a gelled separator GS comprising at least one polymer GP, gellable by the liquid electrolyte, selected from the group consisting of poly(methyl methacrylate) (PMMA), poly(ethylene oxide) (PEO), poly(acrylonitrile) (PAN), and derivatives thereof, which is at least partly gelled by the liquid electrolyte, in contact with the negative electrode (1,2), and by the fact that it comprises at least one layer (4) of a plasticized separator PS comprising at least one polymer PP, able to be plasticized by the liquid electrolyte, selected from the group consisting of poly(vinylidene fluoride) (PVDF), polystyrene (PS), poly(vinyl chloride) (PVC), polycarbonate (PC), ethylene-propylene-diene monomer copolymers (EPDM), and derivatives thereof, which is at least partly in contact with the layer (3 ; 13) of separator GS.

2. The battery according to claim 1, wherein the separator PS layer (4) is at least partly in contact with the positive electrode (5,6).

3. The battery according to claim 1, further comprising an additional separator GS layer (15), called GSa, at least partly between the positive electrode (5,6) and the separator PS layer (4).

4. The battery according to any of claims 1 to 3, wherein the polymer PP is selected from the group consisting of poly(vinylidene fluoride) (PVDF) and poly(vinylidene fluoride)-co-(hexafluoropropylene) (PVDF-HFP) copolymers, and preferably the polymer PP is PVDF-HFP.

5. The battery according to any of claims 1 to 4, wherein the polymer GP is PEO.

6. The battery according to any of claims 1 to 5, wherein the positive electrode (5,6) comprises carbon, active material, polymer PP and optionally at least one plasticizer.

7. A process for manufacturing a lithium electrochemical cell battery (10 ; 12 ; 14) comprising at least one positive electrode (5,6), at least one liquid electrolyte comprising at least one lithium salt, and at least one negative electrode (1,2), comprising
- assembling at least one layer (3 ; 13) of gelled separator GS, comprising at least one polymer GP gellable by the liquid electrolyte, selected from the group consisting of poly(methyl methacrylate) (PMMA), poly(ethylene oxide) (PEO), poly(acrylonitrile) (PAN), and derivatives thereof, onto the negative electrode (1,2), at least one layer (4) of a plasticized separator PS, comprising at least one polymer PP, able to be plasticized by the liquid electrolyte, selected from the group consisting of poly(vinylidene fluoride) (PVDF), polystyrene (PS), poly(vinyl chloride) (PVC), polycarbonate (PC), ethylene-propylene-diene monomer copolymers (EPDM), and derivatives thereof, onto said layer of separator GS, and optionally at least one additional layer (15) of gelled separator GS, called GSa, comprising at least one polymer GP, onto said separator PS layer (4), the combination of these two or three layers constituting a separator between the negative electrode (1,2) and the positive electrode (5,6),
- assembling said separator onto the positive electrode (5,6), and
- impregnating said separator with the liquid electrolyte.

8. The process according to claim 7, wherein the positive electrode (5,6) is manufactured in solution from polymer PP, carbon, active material, plasticizer and solvent.

9. The process according to claim 7, wherein the positive electrode (5,6) is manufactured by extrusion from polymer PP, carbon, active material and plasticizer.

10. The process according to any of claims 7 to 9, wherein the separator PS layer (4) is manufactured in solution from polymer PP, plasticizer and solvent.

11. The process according to any of claims 7 to 9, wherein the separator PS layer (4) is manufactured by extrusion from polymer PP, plasticizer or liquid electrolyte.

12. The process according to any of claims 7 to 11, wherein the separator GS layer (3 ; 13 ; 15) is manufactured in solution from polymer GP, solvent and optionally plasticizer.

13. The process according to any of claims 7 to 11, wherein the separator GS layer (3 ; 13 ; 15) is manufactured by extrusion from polymer GP, and optionally plasticizer or liquid electrolyte.

14. The process according to any of claims 7 to 13, wherein the polymer PP is generally filled with at least one mineral compound selected from the group consisting of MgO, SiO₂, Al₂O₃, TiO₂, BaTiO₃, LiI, and LiAlO₂.

15. The process according to any of claims 7 to 14, wherein the polymer GP is filled with at least one mineral compound selected from the group consisting of MgO, SiO₂, Al₂O₃ , TiO₂ , BaTiO₃, LiI, and LiAlO₂.

16. The process according to any of claims 7 to 15, wherein the two or three PS and GS layers are joined together into a separator by hot calendaring or lamination.

17. The process according to any of claims 7 to 5, wherein said layers form a three-layer separator (3 ; 4 ; 15) obtained by passing the separator PS layer (4) into a solution of polymer GP, or into a solution of liquid electrolyte in which the polymer GP has been dissolved.

18. The process according to any of claims 7 to 16, wherein said layers form a bilayer separator obtained by passing a separator PS layer (4), preassembled with the positive electrode, into a solution of polymer GP or into a solution of liquid electrolyte in which the polymer GP has been dissolved.

19. The process according to any of claims 7 to 18, wherein the positive electrode (5,6) and the separator are generally joined together by hot calendering or lamination in order to form a plastic complex.

20. The process according to any of claims 7 to 19, wherein the plasticizer(s) optionally present in the positive electrode (5,6)/separator assembly is (are) removed by washing or vacuum extraction so as to obtain an assembly containing virtually no plasticizer.

21. The process according to any of claims 7 to 20, wherein the separator/positive electrode (5,6) assembly, preferably containing virtually no plasticizer, is brought into contact with the negative electrode (1,2) by a lamination or calendering step.

22. The process according to any of claims 7 to 21, wherein the plasticizer optionally present is selected from the group consisting of PEO oligomers, dibutyl phthalate (DBP) and propylene carbonate (PC).

23. The process according to any of claims 7 to 22, wherein the polymer PP is PVDF-HFP.

24. The process according to any of claims 7 to 23, wherein the polymer GP is selected from the group consisting of poly(ethylene oxide) (PEO) and poly(acrylonitile) (PAN), and derivatives thereof, preferably the polymer GP is PEO.

25. Use of a lithium electrochemical cell battery (10 ; 12 ; 14) according to any of claims 1 to 6 or produced by a process according to any of claims 7 to 24, in a hybrid vehicle, an electric vehicle, or a stationary or portable equipment.

## Patentansprüche

1. Elektrochemische Lithiumbatterie (10; 12; 14) umfassend
- wenigstens eine positive Elektrode (5, 6),
- wenigstens einen flüssigen Elektrolyten, der wenigstens ein Lithiumsalz umfasst, und
- wenigstens eine negative Elektrode (1, 2),
wobei die Batterie (10; 12; 14) **dadurch gekennzeichnet ist, dass** sie wenigstens eine Schicht (3; 13) eines gelierten Separators, SG, umfassend wenigstens ein Polymer PG, ausgewählt aus der Gruppe, gebildet aus Polymethylmethacrylat (PMMA), Polyethylenoxid (PEO), Polyacrylonitril (PA) und ihren Derivaten, gelierbar durch den flüssigen Elektrolyten, das wenigstens teilweise durch den flüssigen Elektrolyten geliert ist, in Kontakt mit der negativen Elektrode (1, 2) umfasst, und **dadurch**, dass sie wenigstens eine Schicht (4) eines plastifizierten Separators, SP, umfassend wenigstens ein Polymer PP, ausgewählt aus der Gruppe, gebildet durch Polyvinylidenfluorid (PVDF), Polystyrol (PS), Polyvinylchlorid (PVC), Ethylen-Propylen-Dienmonomer-Copolymeren (EPDM) und ihren Derivaten, plastifizierbar durch den flüssigen Elektrolyten, wenigstens teilweise in Kontakt mit der Schicht (3; 13) von Separator SG umfasst.

2. Batterie nach Anspruch 1, wobei die Schicht (4) von Separator SP wenigstens teilweise mit der positiven Elektrode (5, 6) in Kontakt ist.

3. Batterie nach Anspruch 1, die darüber hinaus eine weitere Schicht (15) von Separator SG, SGa genannt, wenigstens teilweise zwischen der positiven Elektrode (5, 6) und der Schicht (4) von Separator SP umfasst.

4. Batterie nach einem der Ansprüche 1 bis 3, bei der das Polymer PP ausgewählt ist aus der Gruppe, die aus Polyvinylidenfluorid (PVDF) und Poly(vinylidenfluorid)-co-(hexafluorpropylen) (PVDF-HFP) besteht, und bevorzugter ist das Polymer PP ein PVDF-HFP.

5. Batterie nach einem der Ansprüche 1 bis 4, wobei das Polymer PG PEO ist.

6. Batterie nach einem der Ansprüche 1 bis 5, wobei die positive Elektrode (5, 6) Kohlenstoff, aktives Material, Polymer PP und gegebenenfalls wenigstens einen Weichmacher umfasst.

7. Verfahren zur Herstellung einer elektrochemischen Lithiumbatterie (10; 12; 14), die wenigstens eine positive Elektrode (5, 6), wenigstens einen flüssigen Elektrolyten, der wenigstens ein Lithiumsalz umfasst, und wenigstens eine negative Elektrode (1, 2) umfasst, umfassend
- die Anordnung wenigstens einer Schicht (3; 13) von geliertem Separator, SG, umfassend wenigstens ein Polymer PG, ausgewählt aus der Gruppe, gebildet durch Polymethylmethacrylat (PMMA), Polyethylenoxid (PEO), Polyacrylonitril (PAN) und ihren Derivaten, gelierbar durch den flüssigen Elektrolyten, auf der negativen Elektrode (1, 2), wenigstens einer Schicht (4) von plastifiziertem Separator, SP, umfassend wenigstens ein Polymer PP, ausgewählt aus der Gruppe, gebildet durch Polyvinylidenfluorid (PVDF), Polystyrol (PS), Polyvinylchlorid (PVC), Polycarbonat (PC), Ethylen-Propylen-Dienmonomer-Copolymere (EPDM) und ihre Derivate, plastifizierbar durch den flüssigen Elektrolyten, auf der Schicht von Separator SG, gegebenenfalls wenigstens einer anderen Schicht (15) von geliertem Separator SG, SGa genannt, umfassend wenigstens ein Polymer PG, auf der Schicht (4) von Separator SP, wobei die Gesamtheit dieser zwei oder drei Schichten einen Separator zwischen der negativen Elektrode (1, 2) und der positiven Elektrode (5, 6) bildet,
- die Anordnung des Separators auf der positiven Elektrode (5, 6), und
- die Imprägnierung des Separators mit flüssigem Elektrolyt.

8. Verfahren nach Anspruch 7, wobei die positive Elektrode (5, 6) in Lösung ausgehend von Polymer PP, Kohlenstoff, aktivem Material, Weichmacher und Lösungsmittel hergestellt wird.

9. Verfahren nach Anspruch 7, wobei die positive Elektrode (5, 6) durch Extrusion ausgehend von Polymer PP, Kohlenstoff, aktivem Material und Weichmacher hergestellt wird.

10. Verfahren nach einem der Ansprüche 7 bis 9, wobei die Schicht (4) von Separator SP in Lösung ausgehend von Polymer PP, Weichmacher und Lösungsmittel hergestellt wird.

11. Verfahren nach einem der Ansprüche 7 bis 9, wobei die Schicht (4) von Separator SP durch Extrusion, ausgehend von Polymer PP, Weichmacher oder flüssigem Elektrolyt, hergestellt wird.

12. Verfahren nach einem der Ansprüche 7 bis 11, wobei die Schicht (3; 13; 15) von Separator SG in Lösung, ausgehend von Polymer PG, Lösungsmittel und gegebenenfalls Weichmacher, hergestellt wird.

13. Verfahren nach einem der Ansprüche 7 bis 11, wobei die Schicht (3; 13; 15) von Separator SG durch Extrusion, ausgehend von Polymer PG und gegebenenfalls Weichmacher oder flüssigem Elektrolyt, hergestellt wird.

14. Verfahren nach einem der Ansprüche 7 bis 13, wobei das Polymer PP als Füllstoff wenigstens eine Mineralverbindung, ausgewählt aus der Gruppe, bestehend aus MgO, SiO₂, Al₂0₃, TiO₂, BaTiO₃, LiI und LiAlO₂, enthält.

15. Verfahren nach einem der Ansprüche 7 bis 14, wobei das Polymer PG als Füllstoff wenigstens eine Mineralverbindung, ausgewählt aus der Gruppe, bestehend aus MgO, SiO₂, Al₂O₃, TiO₂, BaTiO₃, LiI und LiAlO₂, enthält.

16. Verfahren nach einem der Ansprüche 7 bis 15, wobei die Anordnung der zwei oder drei Schichten SP und SG zu einem Separator durch Laminieren oder Heißkalandrieren erfolgt.

17. Verfahren nach einem der Ansprüche 7 bis 15, wobei die genannten Schichten einen dreischichtigen Separator (3; 4; 15) bilden, den man erhält, indem man eine Schicht (4) von Separator SP durch eine Lösung von Polymer PG oder in eine Lösung von flüssigem Elektrolyt, in dem das Polymer PG gelöst wurde, führt.

18. Verfahren nach einem der Ansprüche 7 bis 16, wobei die genannten Schichten einen zweischichtigen Separator bilden, den man erhält, indem man eine Schicht (4) von Separator SP, die vorher mit der positiven Elektrode kombiniert wurde, durch eine Lösung von Polymer PG oder durch eine Lösung von flüssigem Elektrolyt, in dem das Polymer PG gelöst wurde, führt.

19. Verfahren nach einem der Ansprüche 7 bis 18, wobei die positive Elektrode (5, 6) und der Separator durch Laminieren oder Heißkalandrieren kombiniert werden, um einen plastischen Komplex zu bilden.

20. Verfahren nach einem der Ansprüche 7 bis 19, wobei der oder die Weichmacher, der (die) gegebenenfalls in der Anordnung aus positiver Elektrode (5, 6) und dem Separator vorliegt (vorliegen), durch Waschen oder Extraktion unter Vakuum abgesaugt werden, um eine Anordnung zu erhalten, die praktisch frei von Weichmacher ist.

21. Verfahren nach einem der Ansprüche 7 bis 20, wobei die Anordnung des Separators und der positiven Elektrode (5, 6), die vorzugsweise praktisch frei von Weichmacher ist, mit der negativen Elektrode (1, 2) durch eine Stufe des Laminierens oder des Kalandrierens in Kontakt gebracht wird.

22. Verfahren nach einem der Ansprüche 7 bis 21, wobei der Weichmacher, der gegebenenfalls vorhanden ist, ausgewählt wird in der Gruppe, bestehend aus Oligomeren von POE, Dibutylphthalat (DBP) und Propylencarbonat (PC).

23. Verfahren nach einem der Ansprüche 7 bis 22, wobei das Polymer PP PVDF-HFP ist.

24. Verfahren nach einem der Ansprüche 7 bis 23, in dem das Polymer PG ausgewählt wird aus der Gruppe, bestehend aus Polyethylenoxid (PEO), Polyacrylonitril (PAN) und ihren Derivaten, das Polymer PG vorzugsweise POE ist.

25. Verwendung einer Batterie (10; 12; 14) nach einem der Ansprüche 1 bis 6 oder hergestellt nach dem Verfahren nach einem der Ansprüche 7 bis 24 für ein Hybridfahrzeug, ein Elektrofahrzeug, für eine stationäre Anwendung oder für ein tragbares Gerät.
